# EUROPEAN PATENT APPLICATION

(11) **EP 3 809 577 A1**
(43) Date of publication of application: **21.04.2021**
(21) Application number: 20196698.3
(22) Date of filing: 17.09.2020
(51) Int. Cl.: H02M 7/487, H02M 7/5395, H02M 1/00

(54) **HYBRID MULTILEVEL CONVERTER**

(30) Priority: 14.10.2019 CN 201910974439
(71) Applicant: Delta Electronics, Inc., Taoyuan City 333 (TW)
(72) Inventor: HSIN, Wei-Lun, 333 Taoyuan City (TW); LIN, Xin-Hung, 333 Taoyuan City (TW)
(74) Representative: Nederlandsch Octrooibureau

(57) **Abstract**

A power system(100) includes a positive terminal(V+), a negative terminal(V-), a neutral point(Vn), and a conversion circuit including an AC terminal(Vo), two flying capacitors(C3, C4), and two switch modules(140, 160). The two switch modules contain five switches respectively. The two second switches(Q2A, Q2B) are connected in series and then connected in parallel with the first flying capacitor(C3). The two first switches(Q1A, Q1B) are connected in series at two ends of the two second switches respectively, and the third switch(Q5) is connected between a first node between the two second switches and the AC terminal. The two fifth switches(Q4A, Q4B) are connected in series and then connected in parallel with the second flying capacitor(C4). The two fourth switches(Q3A, Q3B) are connected in series at the two ends of the two fifth switches respectively, and the sixth switch(Q6) is connected between a second node between the two fifth switches and the AC terminal.

## Description

### BACKGROUND

### Technical Field

The disclosure relates to a power system, particularly to a five-level power conversion system.

### Description of Related Art

Since each power device in a multi-level conversion device is subjected to a voltage lower than the bus voltage, it is able to achieve a high-power output required for a high-voltage system with a power device having a lower withstand voltage level.

Traditionally, a diode clamped inverter typically requires a capacitive balancing circuit, thereby adding more switches and inductive components, resulting in increased size and cost of the conversion device.

### SUMMARY

One aspect of the present disclosure is a power system including a bus capacitor module and a conversion circuit. The bus capacitor module is with a positive terminal, a negative terminal and a neutral point. The conversion circuit includes an ac point, a first flying capacitor, a second flying capacitor, a first switch module and a second switch module. The first switch module includes two first switch units, two second switch units and a third switch unit. The two second switch units are connected in series and connected to the first flying capacitor in parallel. The two first switch units are connected to two terminals of the two second switch units in series. The third switch unit is connected between the ac point and a first node between the two second switch units. The second switch module includes two fourth switch units, two fifth switch units and a sixth switch unit. The two fifth switch units are connected in series and connected to the second flying capacitor in parallel. The two fourth switch units are connected to two terminals of the two fifth switch units in series. The sixth switch unit is connected between the ac point and a second node between the two fifth switch units. The first switch module is coupled between the positive terminal and the neutral point. The second switch module is coupled between the negative terminal and the neutral point.

Another aspect of the present disclosure is a power system including a bus capacitor module, a first conversion circuit and a second conversion circuit. The bus capacitor module is with a positive terminal, a negative terminal and a neutral point. The first switch module of the first conversion circuit and the second switch module of the second conversion circuit are coupled between the positive terminal and the neutral point. The second switch module of the first conversion circuit and the first switch module of the second conversion circuit are coupled between the negative terminal and the neutral point.

Another aspect of the present disclosure is a power system including a bus capacitor module, a first conversion circuit, a second conversion circuit and a third conversion circuit. The bus capacitor module is with a positive terminal, a negative terminal and a neutral point. The first switch module of the first conversion circuit, the first switch module of the second conversion circuit and the first switch module of the third conversion circuit are coupled between the positive terminal and the neutral point. The second switch module of the first conversion circuit, the second switch module of the second conversion circuit and the second switch module of the third conversion circuit are coupled between the negative terminal and the neutral point.

### BRIEF DESCRIPTION OF THE DRAWINGS

Fig. 1 is a schematic diagram illustrating a power system in accordance with some embodiments of the disclosure.
Figs. 2A∼2D are schematic diagrams illustrating operating states of the power system in accordance with some embodiments of the disclosure.
Figs. 3A∼3D are schematic diagrams illustrating operating states of the power system in accordance with some embodiments of the disclosure.
Fig. 4 is a schematic diagram illustrating a control signal generating circuit in accordance with some embodiments of the disclosure.
Fig. 5 is a schematic diagram illustrating waveforms of the control signals in accordance with some embodiments of the disclosure.
Fig. 6 is a schematic diagram illustrating waveforms of multiple voltage levels in accordance with some embodiments of the disclosure.
Fig. 7 is a schematic diagram of a power system in accordance with some embodiments of the disclosure.
Fig. 8 is a schematic diagram of another power system in accordance with some embodiments of the disclosure.

### DETAILED DESCRIPTION

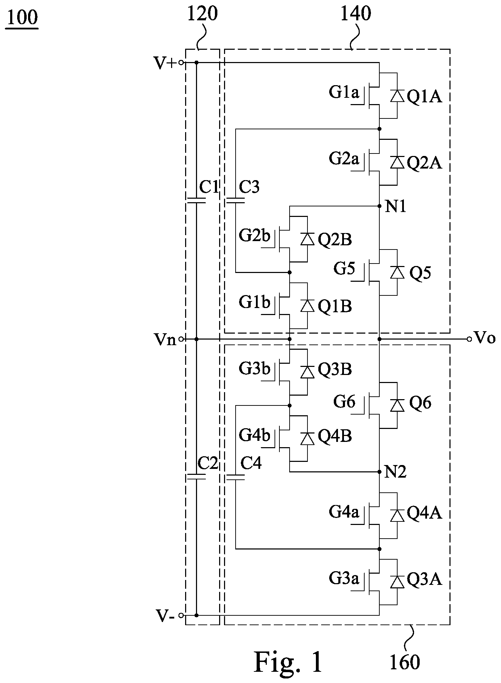

Please refer to Fig. 1. Fig. 1 is a schematic diagram illustrating a power system 100 in accordance with some embodiments of the disclosure. The power system 100 of the present disclosure is able to realize a DC to AC inverter, to convert the DC voltage into a single-phase, three-phase or multi-phase AC voltage to supply power to the back-end circuit or loads. As shown in Fig. 1, in some embodiments, take the single-phase as an example, the power system 100 includes a bus capacitor module 120 and a conversion circuit. The bus capacitor module 120 includes a positive terminal V+, a negative terminal V- and a neutral point Vn. The conversion circuit includes a first flying capacitor C3, a second flying capacitor C4, a first switch module 140, a second switch module 160 and an ac point Vo. The first switch module 140 includes two first switch units Q1A and Q1B, two second switch units Q2A and Q2B, and a third switch unit Q5. The second switch module 160 includes two fourth switch units Q3A and Q3B, two fifth switch units Q4A and Q4B, and a sixth switch unit Q6.

In structural, a first bus capacitor C1 in the bus capacitor module 120 is coupled between the positive terminal V+ and the neutral point Vn. The first switch module 140 is connected to the first bus capacitor C1 in parallel, and also coupled between the positive terminal V+ and the neutral point Vn. The two second switch units Q2A and Q2B of the first switch module 140 are connected in series and then connected to the first flying capacitor C3 in parallel. The two first switch units Q1A and Q1B are connected to two ends of the two second switch units Q2A and Q2B respectively. In other words, the first switch unit Q1A is connected between the positive terminal V+ and the second switch unit Q2A, and the first switch unit Q1B is connected between the second switch unit Q2B and the neutral point Vn. In addition, the third switch unit Q5 is connected between the ac point Vo and a node N1 between the two second switch units Q2A and Q2B.

Similarly, a second bus capacitor C2 in the bus capacitor module 120 is coupled between the negative terminal V- and the neutral point Vn. The second switch module 160 is connected to the second bus capacitor C2 in parallel, and also coupled between the negative terminal V- and the neutral point Vn. The two fifth switch units Q4A and Q4B of the second switch module 160 are connected in series and then connected to the second flying capacitor C4 in parallel. The two fourth switch units Q3A and Q3B are connected to two ends of the two fifth switch units Q4A and Q4B. In other words, the fourth switch unit Q3A is connected between the negative terminal V- and the fifth switch unit Q4A, the fourth switch unit Q3B is connected between the fifth switch unit Q4B and the neutral point Vn. In addition, the sixth switch unit Q6 is connected between the ac point Vo and a node N2 between the two fifth switch units Q4A and Q4B.

Specifically, the switch units Q1A, Q1B, Q2A, Q2B, Q3A, Q3B, Q4A, Q4B, Q5 and Q6 may be realized by an IGBT power transistor, MOSFET power transistor or other semiconductor power switch, respectively, and be connected to a diode in parallel respectively, and the parallel diode may be a parasitic diode inside the switch (i.e., Body Diode) or a separate diode. In some embodiments, as shown in Fig. 1, each one of the switch units Q1A, Q1B, Q2A, Q2B, Q3A, Q3B, Q4A, Q4B, Q5 and Q6 includes a semiconductor power switch and a diode connected in parallel with each other. In other words, each one of the switch units Q1A, Q1B, Q2A, Q2B, Q3A, Q3B, Q4A, Q4B, Q5 and Q6 includes a first terminal, a second terminal and a control terminal.

Therefore, to describe from another angle, the first terminal of the switch unit Q1A is connected to the positive terminal V+, the second terminal of the switch unit Q1A is connected to the first terminal of the switch unit Q2A and the first terminal of the first flying capacitor C3. The second terminal of the switch unit Q2A is connected to the first terminal of the switch unit Q2B and the first terminal of the switch unit Q5 (i.e., the node N1.) The second terminal of the switch unit Q2B is connected to the first terminal of the switch unit Q1B and the second terminal of the first flying capacitor C3. The second terminal of the switch unit Q1B is connected to the neutral point Vn. The second terminal of the switch unit Q5 is connected to the ac point Vo.

Similarly, the first terminal of the switch unit Q3B is connected to the neutral point Vn, the second terminal of the switch unit Q3B is connected to the first terminal of the switch unit Q4B and the first terminal of the second flying capacitor C4. The first terminal of the switch unit Q4A is connected to the second terminal of the switch unit Q4B and the second terminal of the switch unit Q6 (i.e., the node N2.) The second terminal of the switch unit Q4A is connected to the first terminal of the switch unit Q3A and the second terminal of the second flying capacitor C4. The second terminal of the switch unit Q3A is connected to the negative terminal V-. The first terminal of the switch unit Q6 is connected to the ac point Vo.

In configurationally, the bus capacitors C1 and C2 are configured to receive a dc input voltage. Each of the switch units Q1A, Q1B, Q2A, Q2B, Q3A, Q3B, Q4A, Q4B, Q5 and Q6 is configured to selectively conduct or turn off according to corresponding received one of the control signals G1a, G1b, G2a, G2b, G3a, G3b, G4a, G4b, G5 and G6. In this way, by controlling turning on and off of the switch units Q1A, Q1B, Q2A, Q2B, Q3A, Q3B, Q4A, Q4B, Q5 and Q6 through the control signals G1a, G1b, G2a, G2b, G3a, G3b, G4a, G4b, G5 and G6 respectively, the power system 100 is able to convert the dc input voltage into the ac voltage and to output via the ac point Vo.

About the specific operation content of power system 100, please refer to following Table 1. As shown in Table 1, according to whether the voltage between the ac point Vo and the neutral point Vn is greater than zero, it is divided into a positive half cycle and a negative half cycle. In the positive half cycle, the power system 100 includes states 1-4, the voltages between the ac point Vo and the neutral point Vn are 0, +1/4ΔV, +1/2ΔV, +1/4ΔV, respectively, wherein ΔV is the difference between positive terminal V+ and negative terminal V- (i.e., |V+|=|V-|=1/2ΔV.) In the negative half cycle, the power system 100 includes states 5-8, the voltages between the ac point Vo and the neutral point Vn are 0, -1/4ΔV, -1/2ΔV, -1/4ΔV, respectively. In addition, '1' in Table 1 represents conducting, '0' in Table 1 represents turning off.

**Table 1**

| | positive half cycle | | | | negative half cycle | | | |
|---|---|---|---|---|---|---|---|---|
| | state 1 | state 2 | state 3 | state 4 | state 5 | state 6 | state 7 | state 8 |
| Q1A | 0 | 1 | 1 | 0 | 0 | 0 | 0 | 0 |
| Q1B | 1 | 0 | 0 | 1 | 0 | 0 | 0 | 0 |
| Q2A | 0 | 0 | 1 | 1 | 0 | 0 | 0 | 0 |
| Q2B | 1 | 1 | 0 | 0 | 0 | 0 | 0 | 0 |
| Q5 | 1 | 1 | 1 | 1 | 0 | 0 | 0 | 0 |
| Q3A | 0 | 0 | 0 | 0 | 0 | 1 | 1 | 0 |
| Q3B | 0 | 0 | 0 | 0 | 1 | 0 | 0 | 1 |
| Q4A | 0 | 0 | 0 | 0 | 0 | 0 | 1 | 1 |
| Q4B | 0 | 0 | 0 | 0 | 1 | 1 | 0 | 0 |
| Q6 | 0 | 0 | 0 | 0 | 1 | 1 | 1 | 1 |
| voltage | 0 | + 1/4Δ V | + 1/2Δ V | + 1/4A V | 0 | -1/4ΔV | -1/2Δ V | -1/4ΔV |

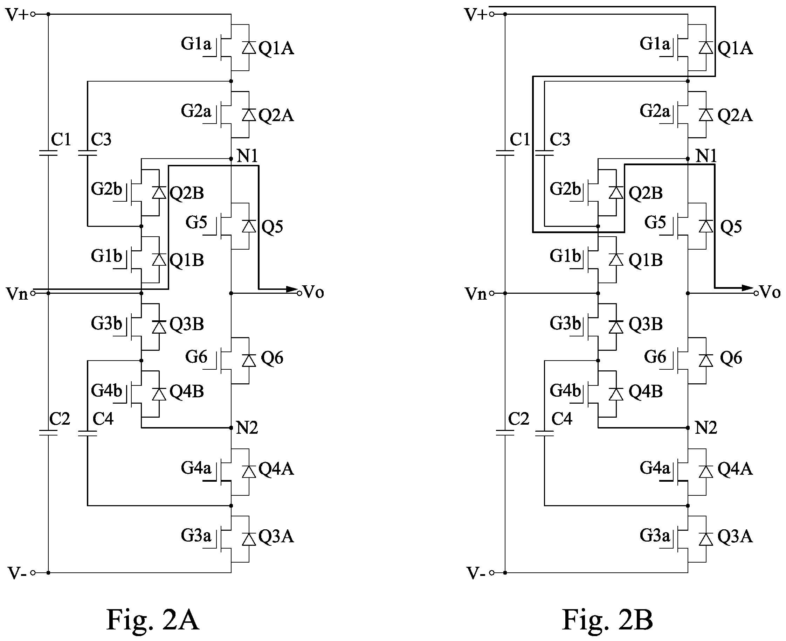

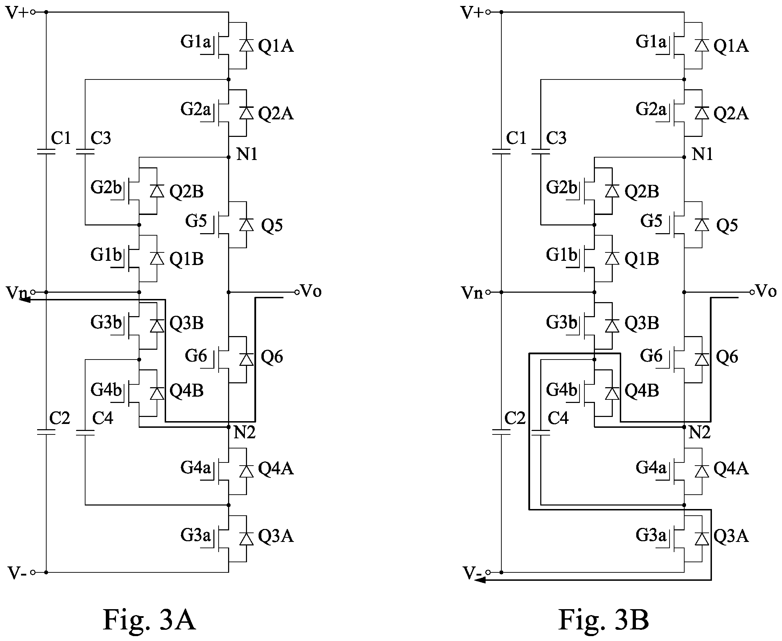

For the sake of convenience, the specific operation of the power system 100 will be described with reference to Figs. 2A∼2D and Figs. 3A∼3D. Figs. 2A∼2D and Figs. 3A∼3D are schematic diagrams illustrating operating states of the power system 100 in accordance with some embodiments of the disclosure. In some embodiments, Figs. 2A∼2D and Figs. 3A∼3D correspond to the states 1-4 and the states 5-8 in Table 1, respectively.

As shown in Fig. 2A, the switch units Q1B, Q2B and Q5 are conducted corresponding to the control signals G1b, G2b and G5 with logic high level, respectively. The switch units Q1A, Q2A, Q3A, Q3B, Q4A, Q4B and Q6 are turned off correspondingly. Therefore, the voltage between the ac point Vo and the neutral point Vn is 0.

As shown in Fig. 2B, the switch units Q1A, Q2B and Q5 are conducted corresponding to the control signals G1a, G2b and G5 with logic high level respectively. The switch units Q1B, Q2A, Q3A, Q3B, Q4A, Q4B and Q6 are turned off correspondingly. Therefore, the voltage between the ac point Vo and the neutral point Vn is (V+)-1/2(V+)=1/2(V+)=+1/4ΔV.

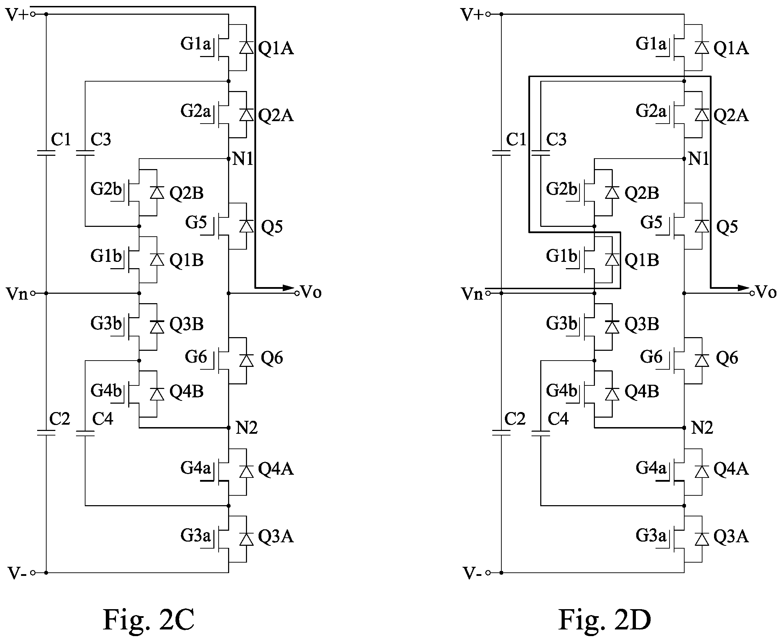

As shown in Fig. 2C, the switch units Q1A, Q2A and Q5 are conducted corresponding to the control signals G1a, G2a and G5 with logic high level. The switch units Q1B, Q2B, Q3A, Q3B, Q4A, Q4B and Q6 are turned off correspondingly. Therefore, the voltage between the ac point Vo and the neutral point Vn is (V+)=+1/2ΔV.

As shown in Fig. 2D, the switch units Q1B, Q2A and Q5 are conducted corresponding to the control signals G1b, G2a and G5 with logic high level. The switch units Q1A, Q2B, Q3A, Q3B, Q4A, Q4B and Q6 are turned off correspondingly. Therefore, the voltage between the ac point Vo and the neutral point Vn is 0-[-1/2(V+)]=1/2(V+)=+1/4ΔV.

As shown in Fig. 3A, the switch units Q3B, Q4B and Q6 are conducted correspondingly to the control signals G3b, G4b and G6 with logic high level. The switch units Q1A, Q1B, Q2A, Q2B, Q3A, Q4A and Q5 are turned off correspondingly. Therefore, the voltage between the ac point Vo and the neutral point Vn is 0.

As shown in Fig. 3B, the switch units Q3A, Q4B and Q6 are conducted correspondingly to the control signals G3a, G4b and G6 with logic high level. The switch units Q1A, Q1B, Q2A, Q2B, Q3B, Q4A and Q5 are turned off correspondingly. Therefore, the voltage between the ac point Vo and the neutral point Vn is (V-)-1/2(V-)=1/2(V-)=-1/4ΔV.

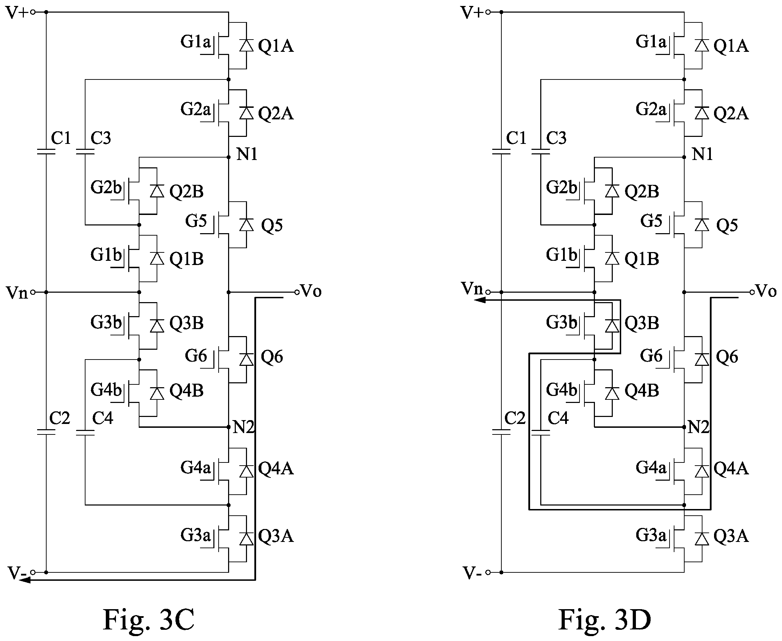

As shown in Fig. 3C, the switch units Q3A, Q4A and Q6 are conducted correspondingly to the control signals G3a, G4a and G6 with logic high level. The switch units Q1A, Q1B, Q2A, Q2B, Q3B, Q4B and Q5 are turned off correspondingly. Therefore, the voltage between the ac point Vo and the neutral point Vn is (V-)=-1/2ΔV.

As shown in Fig. 3D, the switch units Q3B, Q4A and Q6 are conducted correspondingly to the control signals G3b, G4a and G6 with logic high level. The switch units Q1A, Q1B, Q2A, Q2B, Q3A, Q4B and Q5 are turned off correspondingly. Therefore, the voltage between the ac point Vo and the neutral point Vn is 0-[-1/2(V-)]=1/2(V-)=-1/4ΔV.

In this way, by adjusting the control signals G1a, G1b, G2a, G2b, G3a, G3b, G4a, G4b, G5 and G6 corresponding to the switch units Q1A, Q1B, Q2A, Q2B, Q3A, Q3B, Q4A, Q4B, Q5 and Q6, the voltage between the ac point Vo of the power system 100 and the neutral point Vn is able to be one of the five levels (i.e., +1/2ΔV, +1/4ΔV, 0, -1/4ΔV, -1/2ΔV).

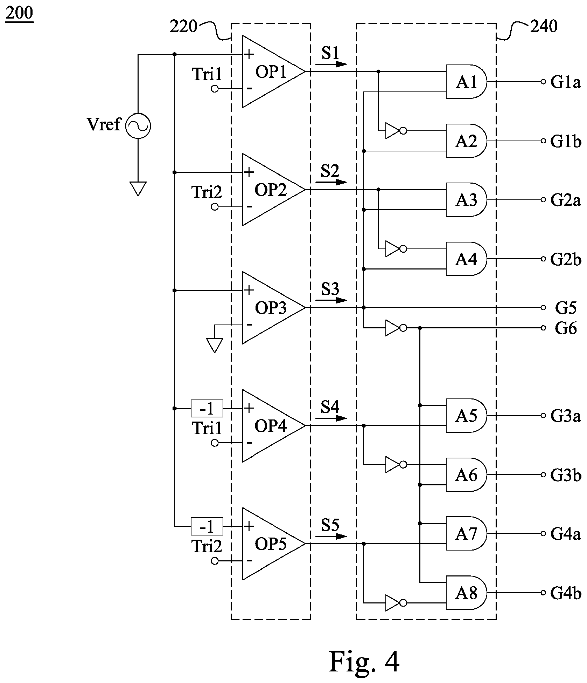

Please refer to Fig. 4. Fig. 4 is a schematic diagram illustrating a control signal generating circuit 200 in accordance with some embodiments of the disclosure. The control signal generating circuit 200 is merely illustrative of an implementable circuit to explain the disclosure. However, those skilled in the art may design different circuits to implement the same logic control. In some embodiments, the power system 100 further includes the control signal generating circuit 200 as shown in Fig. 4. The control signal generating circuit 200 is configured to output control signals G1a, G1b, G2a, G2b, G3a, G3b, G4a, G4b, G5 and G6 to the corresponding first switch module 140 and the corresponding second switch module 160 in the conversion circuit. As shown in Fig. 4, the control signal generating circuit 200 includes a comparison module 220 and a logic circuit 240. The comparison module 220 is configured to receive multiple comparison input signals to generate the multiple corresponding comparison signals S1, S2, S3, S4 and S5. The logic circuit 240 is configured to generate the control signals G1a, G1b, G2a, G2b, G3a, G3b, G4a, G4b, G5 and G6 according to the comparison signals S1, S2, S3, S4 and S5.

In some embodiments, comparison input signals include reference signal Vref, a first triangular wave signal Tri1 and a second triangular wave signal Tri2. The comparison module 220 includes a first comparator OP1, a second comparator OP2, a third comparator OP3, a fourth comparator OP4 and a fifth comparator OP5. The comparators OP1∼OP5 include two input terminals and an output terminal respectively, and are configured to perform compare operations according to signals received by the two input terminals, and to output a comparison signal through the output terminal. It should be noted that, the reference signal Vref may be a sinusoidal signal, or a signal close to a sinusoidal wave, such as a signal that is modulated by a space vector PWM. The reference signal Vref may have different changes for different control methods.

Specifically, the first input terminal of the first comparator OP1 is configured to receive the reference signal Vref. The second input terminal of the first comparator OP1 is configured to receive the first triangular wave signal Tri1. When the voltage level of the reference signal Vref is larger than the voltage level of the first triangular wave signal Tri1, the first comparator OP1 outputs the first comparison signal S1 with high voltage level. When the voltage level of the reference signal Vref is smaller than the voltage level of the first triangular wave signal Tri1, the first comparator OP1 outputs the first comparison signal S1 with low voltage level.

The first input terminal of the second comparator OP2 is configured to receive the reference signal Vref. The second input terminal of the second comparator OP2 is configured to receive the second triangular wave signal Tri2, the second triangular wave signal Tri2 may be a signal with 180 degree difference from the first triangular wave signal Tri1. When the voltage level of the reference signal Vref is larger than the voltage level of the second triangular wave signal Tri2, the second comparator OP2 outputs the second comparison signal S2 with high voltage level. When the voltage level of the reference signal Vref is smaller than the voltage level of the second triangular wave signal Tri2, the second comparator OP2 outputs the second comparison signal S2 with low voltage level.

The first input terminal of the third comparator OP3 is configured to receive the reference signal Vref. The second input terminal of the third comparator OP3 is configured to receive the ground signal. When the voltage level of the reference signal Vref is larger than the voltage level of the ground signal, the third comparator OP3 outputs the third comparison signal S3 with high voltage level. When the voltage level of the reference signal Vref is smaller than the voltage level of the ground signal, the third comparator OP3 outputs the third comparison signal S3 with low voltage level, the third comparison signal S3 is configured to determine the reference signal Vref is at the positive half cycle or the negative half cycle.

The first input terminal of the fourth comparator OP4 is configured to receive the reference signal Vref multiplied by -1 (i.e., the inverse signal of the reference signal Vref.) The second input terminal of the fourth comparator OP4 is configured to receive the first triangular wave signal Tri1. When the voltage level of the inverse signal of the reference signal Vref is larger than the voltage level of the first triangular wave signal Tri1, the fourth comparator OP4 outputs the fourth comparison signal S4 with high voltage level. When the voltage level of the inverse signal of the reference signal Vref is smaller than the voltage level of the first triangular wave signal Tri1, the fourth comparator OP4 outputs the fourth comparison signal S4 with low voltage level.

The first input terminal of the fifth comparator OP5 is configured to receive the reference signal Vref multiplied by -1 (i.e., the inverse signal of the reference signal Vref.) The second input terminal of the fifth comparator OP5 is configured to receive the second triangular wave signal Tri2. When the voltage level of the inverse signal of the reference signal Vref is larger than the voltage level of the second triangular wave signal Tri2, the fifth comparator OP5 outputs the fifth comparison signal S5 with high voltage level. When the voltage level of the inverse signal of the reference signal Vref is smaller than the voltage level of the second triangular wave signal Tri2, the fifth comparator OP5 outputs the fifth comparison signal S5 with low voltage level.

In some embodiments, the logic circuit 240 includes a first AND gate A1, a second AND gate A2, a third AND gate A3, a fourth AND gate A4, a fifth AND gate A5, a sixth AND gate A6, a seventh AND gate A7 and an eighth AND gate A8. The AND gates A1∼A8 include two input terminals and an output terminal respectively. When signals received by the two input terminals of the AND gate are high voltage level, the AND gate is configured to output the control signal with high voltage level through the output terminal. On the other hand, when any one of signals received by the two input terminals of the AND gate is low voltage level, the AND gate is configured to output the control signal with low voltage level through the output terminal.

Specifically, the first input terminal of the first AND gate A1 is coupled to the first comparator OP1, and configured to receive the first comparison signal S1. The second input terminal of the first AND gate A1 is coupled to the third comparator OP3, and configured to receive the third comparison signal S3. When the voltage level of the first comparison signal S1 and the voltage level of the third comparison signal S3 are both high voltage level, the first AND gate A1 outputs the control signal G1a with high voltage level. On the other hand, the first AND gate A1 outputs the control signal G1a with low voltage level.

The first input terminal of the second AND gate A2 is coupled to the first comparator OP1 through a NOT gate, and configured to receive the complementary signal of the first comparison signal S1. The second input terminal of the second AND gate A2 is coupled to the third comparator OP3, and configured to receive the third comparison signal S3.

The first input terminal of the third AND gate A3 is coupled to the second comparator OP2, and configured to receive the second comparison signal S2. The second input terminal of the third AND gate A3 is coupled to the third comparator OP3, and configured to receive the third comparison signal S3.

The first input terminal of the fourth AND gate A4 is coupled to the second comparator OP2 through a NOT gate, and configured to receive the complementary signal of the second comparison signal S2. The second input terminal of the fourth AND gate A4 is coupled to the third comparator OP3, and configured to receive the third comparison signal S3.

The first input terminal of the fifth AND gate A5 is coupled to the third comparator OP3 through a NOT gate, and configured to receive the complementary signal of the third comparison signal S3. The second input terminal of the fifth AND gate A5 is coupled to the fourth comparator OP4, and configured to receive the fourth comparison signal S4.

The first input terminal of the sixth AND gate A6 is coupled to the third comparator OP3 through a NOT gate, and configured to receive the complementary signal of the third comparison signal S3. The second input terminal of the sixth AND gate A6 is coupled to the fourth comparator OP4 through a NOT gate, and configured to receive the complementary signal of the fourth comparison signal S4.

The first input terminal of the seventh AND gate A7 is coupled to the third comparator OP3 through a NOT gate, and configured to receive the complementary signal of the third comparison signal S3. The second input terminal of the seventh AND gate A7 is coupled to the fifth comparator OP5, and configured to receive the fifth comparison signal S5.

The first input terminal of the eighth AND gate A8 is coupled to the third comparator OP3 through a NOT gate, and configured to receive the complementary signal of the third comparison signal S3. The second input terminal of the eighth AND gate A8 is coupled to the fifth comparator OP5 through a NOT gate, and configured to receive the complementary signal of the fifth comparison signal S5.

In addition, the control signal generating circuit 200 is configured to take the third comparison signal S3 outputted by the third comparator OP3 as the control signal G5, and to take the third comparison signal S3 outputted by the third comparator OP3 as the control signal G6.

In this way, according to the comparison input signal (e.g., the reference signal Vref, the triangular wave signals Tri1 and Tri2), the control signal generating circuit 200 is able to generate all control signals G1a, G1b, G2a, G2b, G3a, G3b, G4a, G4b, G5 and G6 corresponding to states 1-8 in Table 1.

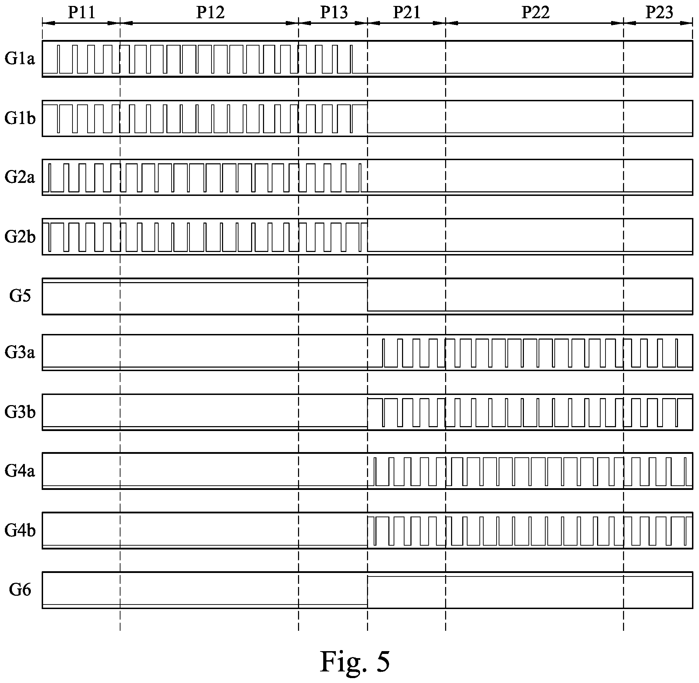

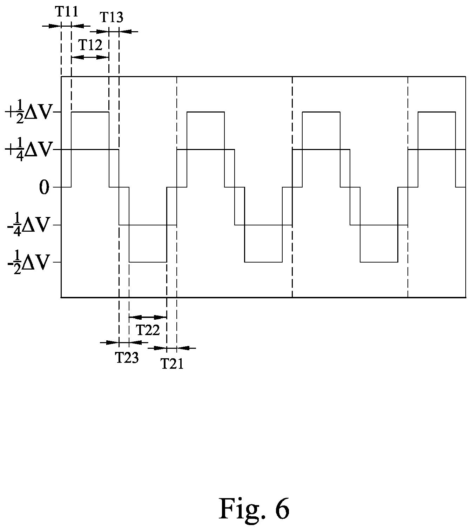

Please refer to Fig. 5 and Fig. 6 together. Fig. 5 is a schematic diagram illustrating waves of the control signals G1a, G1b, G2a, G2b, G3a, G3b, G4a, G4b, G5 and G6 in accordance with some embodiments of the disclosure. Fig. 6 is a schematic diagram illustrating waves of multiple voltage levels in accordance with some embodiments of the disclosure. In this embodiment, based on the control signals G1a, G1b, G2a, G2b, G3a, G3b, G4a, G4b, G5 and G6, the voltage between the ac point Vo of the power system 100 and the neutral point Vn is formed as the waves of multiple voltage levels shown in Fig. 6. It should be noted that, for the convenience and clarity of explanation, Fig. 5 is merely illustrated the changes of the control signals G1a, G1b, G2a, G2b, G3a, G3b, G4a, G4b, G5 and G6 corresponding to one cycle in Fig. 6 (e.g., time periods T11∼T13 and T21∼T23). In addition, the control signals G5 and G6 are complementary signals of each other. The control signals G1a and G1b are complementary signals of each other in the positive half cycle. The control signals G2a and G2b are complementary signals of each other in the positive half cycle. The control signals G3a and G3b are complementary signals of each other in the negative half cycle. The control signals G4a and G4b are complementary signals of each other in the negative half cycle.

As shown in Fig. 5, in time periods P11, P12 and P13, the control signal G5 keeps high voltage level, the control signals G3a, G3b, G4a, G4b and G6 keep low voltage level, the control signals G1a, G1b, G2a and G2b are switches between high and low voltage levels. According to Table 1 above, in time period P11, the voltage between the ac point Vo of the power system 100 and the neutral point Vn is switched between 0 and +1/4ΔV, as waveform of time period T11 shown in Fig. 6. In time period P12, the voltage between the ac point Vo of the power system 100 and the neutral point Vn is switched between +1/4ΔV and +1/2ΔV, as waveform of time period T12 shown in Fig. 6. In time period P13, similar to time period P11, the voltage between the ac point Vo of the power system 100 and the neutral point Vn is switched between +1/4ΔV and 0, as waveform of time period T13 shown in Fig. 6.

In time periods P21, P22 and P23, the control signal G6 keeps high voltage level, the control signals G1a, G1b, G2a, G2b and G5 keep low voltage level, the control signals G3a, G3b, G4a and G4b are switches between high and low voltage levels. According to Table 1 above, in time period P21, the voltage between the ac point Vo of the power system 100 and the neutral point Vn is switched between 0 and -1/4ΔV, as waveform of time period T21 shown in Fig. 6. In time period P22, the voltage between the ac point Vo of the power system 100 and the neutral point Vn is switched between -1/4ΔV and -1/2ΔV, as waveform of time period T22 shown in Fig. 6. In time period P23, similar to time period P21, the voltage between the ac point Vo of the power system 100 and the neutral point Vn is switched between 0 and -1/4ΔV, as waveform of time period T23 shown in Fig. 6.

In this way, according to the control signal G1a, G1b, G2a, G2b, G3a, G3b, G4a, G4b, G5 and G6, as shown in Fig. 5, generated by the control signal generating circuit 200, the voltage between the ac point Vo of the power system 100 and the neutral point Vn is formed as the waves of five voltage levels shown in Fig. 6.

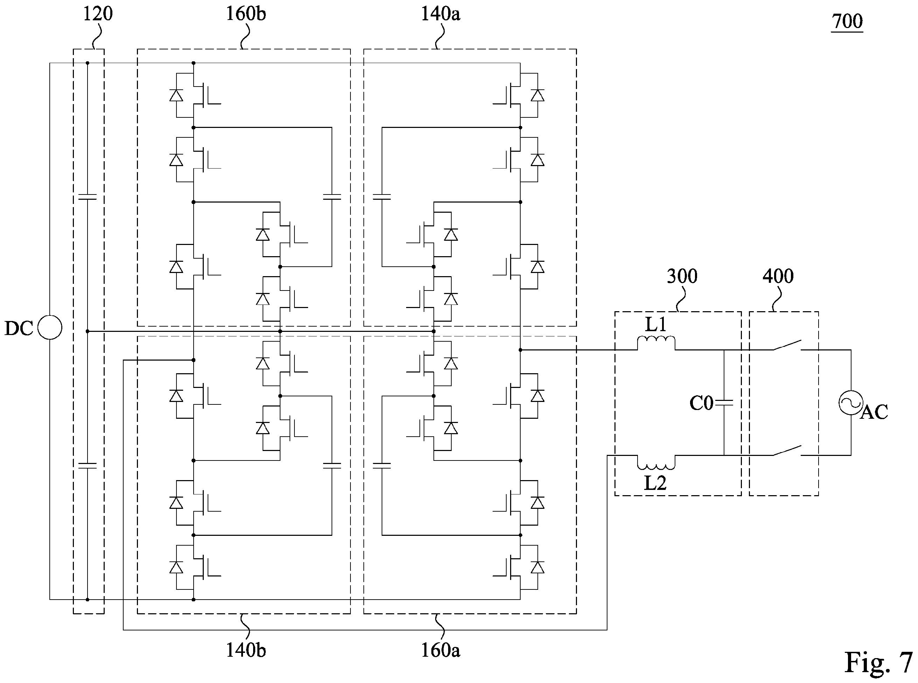

Please refer to Fig. 7. Fig. 7 is a schematic diagram of a power system 700 in accordance with some embodiments of the disclosure. In Fig. 7, the similar components associated with the embodiment of Fig. 1 are labeled with the same number for ease of understanding. The specific principle of the similar component has been explained in detail in the previous paragraphs, and unless it has a cooperative relationship with the components of Fig. 7, it is not repeated here. This embodiment applies the disclosure to a full bridge circuit architecture. As shown in Fig. 7, in some embodiments, the power system 700 includes a dc input voltage DC, a bus capacitor module 120, two conversion circuits, a filter circuit 300, a protection circuit 400 and an ac output voltage AC. The two conversion circuits include the first switch module 140 and the second switch module 160, as Fig. 1 shown, respectively.

Specifically, in this embodiment, the first conversion circuit includes the first switch module 140a and the second switch module 160a. The second conversion circuit includes the first switch module 140b and the second switch module 160b. In structure, the first switch module 140a and the second switch module 160b are coupled between the positive terminal V+ and the neutral point Vn of the bus capacitor module 120. The second switch module 160a and the first switch module 140b are coupled between the negative terminal V- and the neutral point Vn of the bus capacitor module 120. In configurationally, as a general full-bridge circuit architecture, the switches that are diagonal to each other in the two conversion circuits have the same control signal.

In some embodiments, as shown in Fig. 7, the filter circuit 300 includes a first filter inductor L1, a second filter inductor L2 and a filter capacitor C0. The first terminal of the first filter inductor L1 is connected to the ac point of the first conversion circuit, the second terminal of the first filter inductor L1 is connected to the first terminal of the filter capacitor C0. The first terminal of the second filter inductor L2 is connected to the ac point of the second conversion circuit, the second terminal of the second filter inductor L2 is connected to the second terminal of the filter capacitor C0.

In addition, in some embodiments, as shown in Fig. 7, the protection circuit 400 is connected between the filter circuit 300 and the ac output voltage AC. The protection circuit 400 is configured to disconnect the connection point to protect the power system 700 when a voltage abnormality occurs. For example, the protection circuit 400 may be realized by a relay, but not limited the present disclosure.

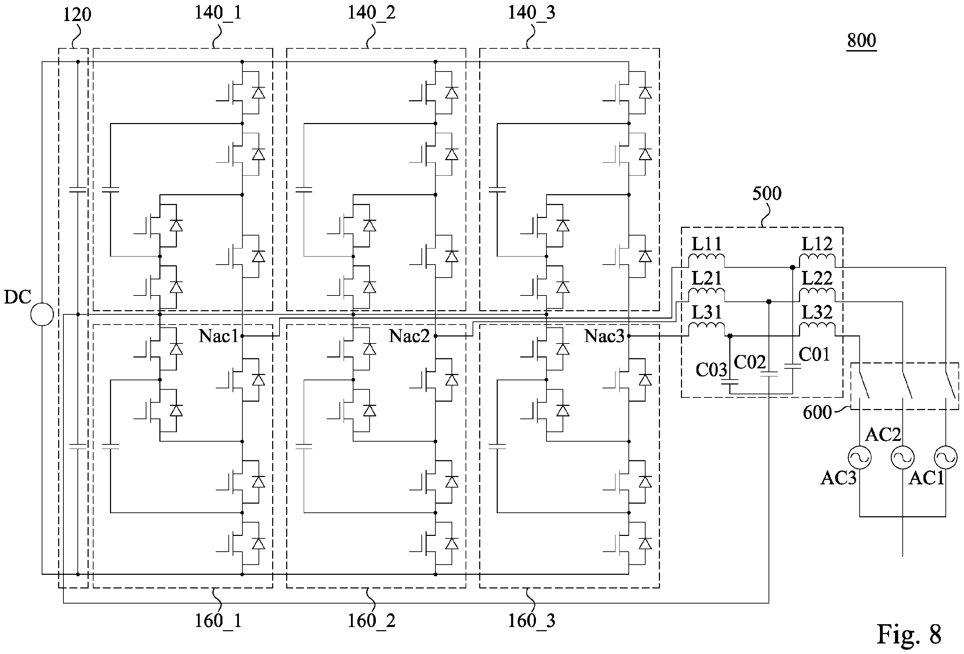

Please refer to Fig. 8. Fig. 8 is a schematic diagram of another power system 800 in accordance with some embodiments of the disclosure. In Fig. 8, the similar components associated with the embodiment of Fig. 1 are labeled with the same number for ease of understanding. The specific principle of the similar component has been explained in detail in the previous paragraphs, and unless it has a cooperative relationship with the components of Fig. 8, it is not repeated here. As shown in Fig. 8, in embodiments, the power system 800 includes a dc input voltage DC, a bus capacitor module 120, three conversion circuits, a filter circuit 500, a protection circuit 600 and an ac output voltage AC1∼AC3. The three conversion circuits include the first switch module 140 and the second switch module 160, as shown in Fig. 1, respectively.

Specifically, in this embodiment, the first conversion circuit includes the first switch module 140_1 and the second switch module 160_1. The second conversion circuit includes the first switch module 140_2 and the second switch module 160_2. The third conversion circuit includes the first switch module 140_3 and the second switch module 160_3. In structure, the first switch modules 140_1, 140_2 and 140_3 are coupled between the positive terminal V+ and the neutral point Vn of the bus capacitor module 120. The second switch modules 160a, 160_2 and 160_3 are coupled between the negative terminal V- and the neutral point Vn of the bus capacitor module 120.

In some embodiments, as shown in Fig. 8, the filter circuit 500 includes first filter inductors L11 and L12, second filter inductors L21 and L22, third filter inductors L31 and L32, and three filter capacitors C01, C02 and C03. The first terminal of the first filter inductor L11 is connected to the ac point Nac1 of the first conversion circuit, the second terminal of the first filter inductor L11 is connected to the first terminal of the first filter inductor L12. The first terminal of the second filter inductor L21 is connected to the ac point Nac2 of the second conversion circuit, the second terminal of the second filter inductor L21 is connected to the first terminal of the second filter inductor L22. The first terminal of the third filter inductor L31 is connected to the ac point Nac3 of the third conversion circuit, the second terminal of the third filter inductor L31 is connected to the first terminal of the third filter inductor L32. Each first terminal of the filter capacitors C01, C02 and C03 is connected to each second terminal of the first filter inductor L11, the second filter inductor L21 and the third filter inductor L31. The second terminals of the filter capacitors C01, C02 and C03 are connected to the neutral point Vn. The second terminal of the first filter inductor L12, the second filter inductor L22 and the third filter inductor L32 are connected to the ac output voltage AC1, AC2 and AC3 through the protection circuit 600. It should be noted that, the above filter circuit 500 is not limited to the configuration disclosed in Fig. 8, and may be configured as first-order filtering or second-order filtering according to requirements.

In addition, in some embodiments, as shown in Fig. 8, the protection circuit 600 is connected between the filter circuit 500 and ac output voltage AC1∼AC3. The protection circuit 600 is configured to disconnect the connection point to protect the power system 800 when a voltage abnormality occurs. For example, the protection circuit 600 may be realized by relays, but not limited the present disclosure.

Furthermore, each of the above embodiments may be implemented by various types of digital or analog circuits or by different integrated circuit chips. Individual components may also be integrated into a single control chip. Various control circuits may also be implemented by various processors or other integrated circuit chips. The above is only an example, and it should not limit the present disclosure.

In summary, in the above embodiments, by using the circuit topology design of the power systems 100, 700 or 800, with the control signals G1a, G1b, G2a, G2b, G3a, G3b, G4a, G4b, G5 and G6 generated by the control signal generating circuit 200, the power systems 100, 700, and 800 are able to perform power converting to produce a multi-level output waveform. Compared with the conventional diode clamped inverter, it has the advantages of fewer semiconductor components and no need for a balancing circuit, thereby achieving higher efficiency.

## Claims

1. A power system(100) **characterized by** comprising:
a bus capacitor module(120), with a positive terminal(V+), a negative terminal(V-) and a neutral point(Vn); and
a conversion circuit, comprising:
an ac point(Vo);
a first flying capacitor(C3) and a second flying capacitor(C4);
a first switch module(140), comprising two first switch units(Q1A, Q1B), two second switch units(Q2A, Q2B) and a third switch unit(Q5), the two second switch units(Q2A, Q2B) connected in series and connected to the first flying capacitor(C3) in parallel, the two first switch units(Q1A, Q1B) connected to two terminals of the two second switch units in series, the third switch unit(Q5) connected between the ac point(Vo) and a first node(N1) between the two second switch units; and
a second switch module(160), comprising two fourth switch units(Q3A, Q3B), two fifth switch units(Q4A, Q4B) and a sixth switch unit(Q6), the two fifth switch units(Q4A, Q4B) connected in series and connected to the second flying capacitor(C4) in parallel, the two fourth switch units(Q3A, Q3B) connected to two terminals of the two fifth switch units in series, the sixth switch unit(Q6) connected between the ac point(Vo) and a second node(N2) between the two fifth switch units,
wherein the first switch module(140) is coupled between the positive terminal(V+) and the neutral point(Vn), the second switch module(160) is coupled between the negative terminal(V-) and the neutral point(Vn).

2. The power system of claim 1, further comprising:
a control signal generating circuit(200), configured to output a plurality of control signals(G1a∼G6) to the conversion circuit, the control signal generating circuit comprising:
a comparison module(220), configured to receive a plurality of comparison input signals(Tri1, Tri2, Vref) to generate corresponding a plurality of comparison signals(S1∼S5); and
a logic circuit(240), configured to generate the control signals(G1a∼G6) according to the comparison signals(S1∼**S**5).

3. The power system of claim 2, wherein the comparison module comprises:
a first comparator(OP1), two input terminals of the first comparator receives a reference signal(Vref) and a first triangular wave signal(Tri1) respectively, the first comparator(OP1) configured to output a first comparison signal(S1);
a second comparator(OP2), two input terminals of the second comparator receives the reference signal(Vref) and a second triangular wave signal(Tri2) respectively, the second comparator(OP2) configured to output a second comparison signal(S2);
a third comparator(OP3), two input terminals of the third comparator receives the reference signal(Vref) and a ground signal respectively, the third comparator(OP3) configured to output a third comparison signal(S3);
a fourth comparator(OP4), two input terminals of the fourth comparator receives an inverse reference signal and the first triangular wave signal(Tri1) respectively, the fourth comparator configured to output a fourth comparison signal(S4); and
a fifth comparator(OP5), two input terminals of the fifth comparator receives the inverse reference signal and the second triangular wave signal(Tri2) respectively, the fifth comparator(OP5) configured to output a fifth comparison signal(S5).

4. The power system of claim 3, wherein the logic circuit comprises:
a first AND gate(A1), a first input terminal of the first AND gate receives the first comparison signal(S1), a second input terminal of the first AND gate receives the third comparison signal(S3), the first AND gate configured to output a first control signal(G1a);
a second AND gate(A2), a first input terminal of the second AND gate receives a complementary signal of the first comparison signal, a second input terminal of the second AND gate receives the third comparison signal(S3), the second AND gate configured to output a second control signal(G1b);
a third AND gate(A3), a first input terminal of the third AND gate receives the second comparison signal(S2), a second input terminal of the third AND gate receives the third comparison signal(S3), the third AND gate configured to output a third control signal(G2a);
a fourth AND gate(A4), a first input terminal of the fourth AND gate receives a complementary signal of the second comparison signal, a second input terminal of the fourth AND gate receives the third comparison signal(S3), the fourth AND gate configured to output a fourth control signal(G2b);
a fifth AND gate(A5), a first input terminal of the fifth AND gate receives a complementary signal of the third comparison signal, a second input terminal of the fifth AND gate receives the fourth comparison signal(S4), the fifth AND gate configured to output a fifth control signal(G3a);
a sixth AND gate(A6), a first input terminal of the sixth AND gate receives the complementary signal of the third comparison signal, a second input terminal of the sixth AND gate receives a complementary signal of the fourth comparison signal, the sixth AND gate configured to output a sixth control signal(G3b);
a seventh AND gate(A7), a first input terminal of the seventh AND gate receives the complementary signal of the third comparison signal, a second input terminal of the seventh AND gate receives the fifth comparison signal(S5), the seventh AND gate configured to output a seventh control signal(G4a); and
an eighth AND gate(A8), a first input terminal of the eighth AND gate receives the complementary signal of the third comparison signal, a second input terminal of the eighth AND gate receives a complementary signal of the fifth comparison signal, the eighth AND gate configured to output an eighth control signal(G4b).

5. The power system of claim 4, wherein the two first switch units(Q1A, Q1B) receive the first control signal(G1a) and the second control signal(G1b) respectively, the two second switch units(Q2A, Q2B) receive the third control signal(G2a) and the fourth control signal(G2b) respectively, the third switch unit(Q5) receives the third comparison signal(G5), the two fourth switch units(Q3A, Q3B) receive the fifth control signal(G3a) and the sixth control signal(G3b) respectively, the two fifth switch units(Q4A, Q4B) receive the seventh control signal(G4a) and the eighth control signal(G4b) respectively, the sixth switch unit(G6) receives the complementary signal of the third comparison signal(G6).

6. The power system of claim 4 or 5, wherein the first control signal(G1a) and the second control signal(G1b) are complementary signals of each other in a positive half cycle, the third control signal(G2a) and the fourth control signal(G2b) are complementary signals of each other in the positive half cycle, the fifth control signal(G5) and the sixth control signal(G6) are complementary signals of each other in a negative half cycle, the seventh control signal(G3a) and the eighth control signal(G3b) are complementary signals of each other in the negative half cycle.

7. A power system(700), **characterized by** comprising:
a bus capacitor module(120), with a positive terminal, a negative terminal and a neutral point;
a first conversion circuit(140a, 160a) and a second conversion circuit(140b, 160b), each one of the first conversion circuit and the second conversion circuit comprising:
an ac point(Vo);
a first flying capacitor(C3) and a second flying capacitor(C4);
a first switch module(140), comprising two first switch units(Q1A, Q1B), two second switch units(Q2A, Q2B) and a third switch unit(Q5), the two second switch units(Q2A, Q2B) connected in series and connected to the first flying capacitor(C3) in parallel, the two first switch units(Q1A, Q1B) connected to two terminals of the two second switch units in series, the third switch unit(Q5) connected between the ac point(Vo) and a first node(N1) between the two second switch units; and
a second switch module(160), comprising two fourth switch units(Q3A, Q3B), two fifth switch units(Q4A, Q4B) and a sixth switch unit(Q6), the two fifth switch units(Q4A, Q4B) connected in series and connected to the second flying capacitor(C4) in parallel, the two fourth switch units(Q3A, Q3B) connected to two terminals of the two fifth switch units in series, the sixth switch unit(Q6) connected between the ac point(Vo) and a second node(N2) between the two fifth switch units,
wherein the first switch module(140a) of the first conversion circuit and the second switch module(160b) of the second conversion circuit are coupled between the positive terminal and the neutral point, the second switch module(160a) of the first conversion circuit and the first switch module(140b) of the second conversion circuit are coupled between the negative terminal and the neutral point.

8. The power system of claim 7, further comprising:
a filter circuit(300), comprising:
a first filter inductor(L1), a first terminal of the first filter inductor connected to the ac point of the first conversion circuit;
a second filter inductor(L2), a first terminal of the second filter inductor connected to the ac point of the second conversion circuit; and
a filter capacitor(C0), connected between a second terminal of the first filter inductor and a second terminal of the second filter inductor.

9. The power system of claim 8, further comprising:
a protection circuit(400), connected between the filter circuit and an ac output voltage.

10. A power system(800), **characterized by** comprising:
a bus capacitor module(120), with a positive terminal, a negative terminal and a neutral point;
a first conversion circuit(140_1, 160_1), a second conversion circuit(140_2, 160_2) and a third conversion circuit(140_3, 160_3), each one of the first conversion circuit, the second conversion circuit and the third conversion circuit comprising:
an ac point(Vo);
a first flying capacitor(C3) and a second flying capacitor(C4);
a first switch module(140), comprising two first switch units(Q1A, Q1B), two second switch units(Q2A, Q2B) and a third switch unit(Q5), the two second switch units(Q2A, Q2B) connected in series and connected to the first flying capacitor(C3) in parallel, the two first switch units(Q1A, Q1B) connected to two terminals of the two second switch units in series, the third switch unit(Q5) connected between the ac point(Vo) and a first node(N1) between the two second switch units; and
a second switch module(160), comprising two fourth switch units(Q3A, Q3B), two fifth switch units(Q4A, Q4B) and a sixth switch unit(Q6), the two fifth switch units(Q4A, Q4B) connected in series and connected to the second flying capacitor(C4) in parallel, the two fourth switch units(Q3A, Q3B) connected to two terminals of the two fifth switch units in series, the sixth switch unit(Q6) connected between the ac point(Vo) and a second node(N2) between the two fifth switch units,
wherein the first switch module(140_1) of the first conversion circuit, the first switch module(140_2) of the second conversion circuit and the first switch module(140_3) of the third conversion circuit are coupled between the positive terminal and the neutral point, the second switch module(160_1) of the first conversion circuit, the second switch module(160_2) of the second conversion circuit and the second switch module(160_3) of the third conversion circuit are coupled between the negative terminal and the neutral point.

11. The power system of claim 10, further comprising:
a filter circuit(500), comprising:
a first filter inductor(L11, L12), connected in series between the ac point of the first conversion circuit and a first ac output voltage;
a first filter capacitor(C01), a first terminal of the first filter capacitor connected to the first filter inductor, a second terminal of the first filter capacitor connected to the neutral point;
a second filter inductor(L21, L22), connected in series between the ac point of the second conversion circuit and a second ac output voltage;
a second filter capacitor(C02), a first terminal of the second filter capacitor connected to the second filter inductor, a second terminal of the second filter capacitor connected to the neutral point;
a third filter inductor(L31, L32), connected in series between the ac point of the third conversion circuit and a third ac output voltage; and
a third filter capacitor(C03), a first terminal of the third filter capacitor connected to the third filter inductor, a second terminal of the second filter capacitor connected to the neutral point.

12. The power system of claim 11, further comprising:
a protection circuit(600), connected between the first ac output voltage, the second ac output voltage, the third ac output voltage and the filter circuit.
